# EUROPEAN PATENT APPLICATION

(11) **EP 4 092 532 A1**
(43) Date of publication of application: **23.11.2022**
(21) Application number: 21174094.9
(22) Date of filing: 17.05.2021
(51) Int. Cl.: G06F 9/50, G06F 1/04, G06F 9/54

(54) **GENERATING A TIMESTAMP AT A CONTROL UNIT**

(71) Applicant: Bayerische Motoren Werke Aktiengesellschaft, 80809 München (DE)
(72) Inventor: Abdelhameed, Mohamed-Saad, 85221 Dachau (DE); Bilra, Manjeet Singh, 85457 Hörlkofen (Wörth) (DE)

(57) **Abstract**

Provided is a method for generating a second timestamp at a control unit of a vehicle. The control unit comprises at least two cores, a shared memory being accessible by the at least two cores, and a hardware counter being accessible by the at least two cores. The method comprises: generating, at a basic software layer of a first one of the at least two cores, a first time stamp; sending the generated first timestamp from the basic software layer of the first one of the at least two cores to the shared memory via an application software layer of the first one of the at least two cores together with a first value taken from the hardware counter at a time of generating the first timestamp and/or at a time of sending the first timestamp from the application software layer of the first one of the at least two cores to the shared memory; saving the first timestamp and the first value of the hardware counter in the shared memory; and generating, at a second one of the at least two cores, the second timestamp based on the saved first timestamp and the saved first value of the hardware counter.

## Description

The present invention is directed to a method for generating a timestamp at a control unit of a vehicle, and a control unit configured to carry out the method.

For an automated or autonomous vehicle, e.g. a car, there is a lot of data processing including perception from multiple sensors. The data processing may be done on multiple cores of an electronic control unit (ECU) thereby taking the data from the sensors as an input and process the data before sending the data to the vehicle.

The data on the multiple cores need to have the same, i.e., a synchronized, timestamp at each core of the ECU. The timestamp distribution between the cores may vary on different operating systems, e.g., with respect to the AUTOSAR Classic platform or the AUTOSAR Adaptive platform (or the Linux platform).

AUTOSAR in general uses a three-layer architecture including a basic or base software layer (BSW), a Run-Time Environment (RTE) and an application software layer (ASW). The BSW comprises standardized software modules (mostly) without a functional task, which provide services necessary to run the functional part of the upper software layers. The RTE is a middleware that abstracts from the network topology for inter- and intra-ECU information exchange between application software components and between the BSW and the ASW. The ASW comprises application software components that interact with the RTE.

More specifically, the AUTOSAR Classic platform architecture distinguishes three software layers running on a microcontroller at the highest level of abstraction: ASW, RTE and BSW. The ASW is largely hardware-independent. Communication between software components and access to BSW is done through RTE, which is the complete interface for applications. BSW is divided into three main layers and complex drivers: Services, ECU abstraction and microcontroller abstraction. The services are also divided into functional groups that provide the infrastructure for system, memory, and communication services. A key concept of the AUTOSAR Classic platform is the Virtual Functional Bus (VFB). This virtual bus is an abstract set of RTEs and decouples applications from the infrastructure. Communication takes place via dedicated ports, i.e. the communication interfaces of the application software must be mapped to these ports. The VFB handles the communication within the individual ECUs and between the ECUs. From an application perspective, no detailed knowledge of lower level technologies or dependencies is required. This supports hardware-independent development and use of application software.

New use cases required the development of the AUTOSAR Adaptive Platform. One example of such a use case is inter alia highly automated driving, where the driver temporarily and/or partially transfers responsibility for driving to the vehicle. This requires, for example, communication with traffic infrastructure (e.g., traffic signs and lights), cloud backends (e.g., access to the latest traffic information or map data), or the use of microprocessors and high-performance computing hardware for parallel processing (e.g., GPUs). In addition, Car-2-X applications require interaction with vehicles and off-board systems. This means that the system must provide secure on-board communication, support for cross-domain computing platforms, smartphone integration, integration of non-AUTOSAR systems, etc. Cloud-based services also require dedicated security measures such as secure cloud interaction and right-of-way for emergency vehicles. They enable remote and distributed services, such as remote diagnostics, over-the-air (OTA) updates, repair and replacement. The core of the AUTOSAR Adaptive Platform is an operating system based on the POSIX standard. The operating system can be used by the application over a subset of POSIX as defined in IEEE1003.13 (namely PSE51). One of the main features of the AUTOSAR Adaptive Platform is service-oriented communication. Two types of interfaces are available for the Adaptive Platform: Services and Application Programming Interfaces (APIs). The platform consists of functional clusters grouped into services and the AUTOSAR Adaptive Platform base. The AUTOSAR Adaptive Platform includes both specification and code.

However, as explained above, the data on the multiple cores need to have the same timestamp at each core. According to known methods of timestamp distribution there is always a delay resulting in an inaccuracy of the distributed timestamp when distributing the timestamp between the cores.

An object of the invention is to provide a solution to ensure that at least some, preferably all, cores of a multi core processor use the same timestamp. More specifically, a solution is provided to ensure that all cores can get a substantially accurate synchronized timestamp regardless of any delay due to inter core communication.

This object is solved by the features of the independent claims. The dependent claims contain preferred further developments of the invention.

More specifically, the object is solved by a method for generating a second timestamp at a control unit of a vehicle. The second timestamp may be a timestamp to be used in applications carried out, i.e. running, at least partly on the second core.

The control unit comprises at least two cores, a shared memory being accessible by the at least two cores, and a hardware counter being accessible by the at least two cores.

The method comprises a step of generating, at a basic software layer of a first one of the at least two cores, a first time stamp.

The method further comprises a step of sending the generated first timestamp from the basic software layer of the first one of the at least two cores to the shared memory via an application software layer of the first one of the at least two cores. Together with the first timestamp a first value is sent from the application software layer of the first one of the at least two cores to the shared memory, wherein the first value is taken from the hardware counter at a time of generating the first timestamp and/or at a time of sending the first timestamp from the application software layer of the first one of the at least two cores to the shared memory.

The method further comprises a step of saving the first timestamp and the first value of the hardware counter in the shared memory.

The method further comprises a step of generating, at a second one of the at least two cores, the second timestamp based on the saved first timestamp and the saved first value of the hardware counter.

The first one of the two cores may be called master core and the second one of the two cores may be called slave core. The memory may be called shared buffer since it may be used by both cores. The control unit may be an electronic control unit comprising an AUTOSAR platform, preferably an AUTOSAR Adaptive platform, and/or the Linux platform. The hardware counter may comprise a monotonic clock.

The step of generating the second timestamp may comprise computing, at the second one of the at least two cores, a difference between the first value of the hardware counter and a second value of the hardware counter taken from the hardware counter at a time of generating the second timestamp. The step of generating the second timestamp may further comprise updating the first timestamp based on the computed difference to generate the second timestamp.

Additionally or alternatively, the second one of the at least two cores may comprise an application software layer, wherein the second timestamp is generated at the application software layer of the second one of the at least two cores.

Additionally or alternatively, the control unit may be connected to a communication bus, e.g., an Ethernet bus, comprising a master clock. The method may further comprise a step of receiving, at the control unit, a master time from the master clock to be used for generating the first timestamp.

The at least two cores may use the so called end-to-end protection of the AUTOSAR standard, respectively.

Thus, additionally or alternatively, the method may comprise a step of adding a counter and a checksum, at the application software layer of the first one of the at least two cores, to the first timestamp and the first value of the hardware counter before the first timestamp and the first value of the hardware counter are sent from the application software layer of the first one of the at least two cores to the shared memory.

The counter and the checksum may be saved together with the first timestamp and the first value of the hardware counter in the shared memory.

The second one of the at least two cores may check whether there was a communication failure based on the counter and the checksum before, during and/or after generating the second timestamp.

In the following, the above given abstract description is summarized in other words and concretized. As described above, the control unit is preferably an electronic control unit (ECU) being based on an AUTOSAR Adaptive platform and comprising multiple cores. Therefore, the terminology used in the following description is based on the AUTOSAR Adaptive Platform standard.

The basic principle of the invention may be described as to provide a solution to ensure that all cores on multi core processors can get an accurate synchronized timestamp regardless of any delay due to inter core and communication with help of a shared buffer, the shared buffer containing a generated time stamp and a hardware counter (HW) instance.

More specifically, a basic software layer (BSW) on the master core generates a timestamp. This timestamp will be copied, optionally cyclically, to the shared buffer including the HW counter instance. The shared buffer is a memory where the timestamps and the counter instance can be stored (and updated cyclically with a given tolerance). Each individual slave core of the multi core processor will get the timestamp including the HW counter instance from the shared buffer. The respective slave core reads the HW counter instance from the shared buffer to calculate the difference in the HW counter instance when the timestamp was generated/sent and the actual time when local HW counter instance is read. This results into correct timing.

The solution could be used for an ASIL or QM system, especially depending on the integrity level of the hardware counter.

Furthermore a control unit for a vehicle may be provided. The control unit comprises at least two cores, a shared memory being accessible by the at least two cores, and a hardware counter being accessible by the at least two cores.

A first one of the at least two cores is configured to generate at a basic software layer of the first one of the at least two cores a first time stamp.

The first one of the at least two cores is configured to send the generated first timestamp from the basic software layer of the first one of the at least two cores to the shared memory via an application software layer of the first one of the at least two cores together with a first value taken from the hardware counter at a time of generating the first timestamp and/or at a time of sending the first timestamp from the application software layer of the first one of the at least two cores to the shared memory.

The shared memory may be configured to save the first timestamp and the first value of the hardware counter.

The second one of the at least two cores is configured to generate the second timestamp based on the saved first timestamp and the saved first value of the hardware counter.

The control unit may be configured to carry out the above described method. The above given description with respect to the method applies mutatis mutandis to the control unit and vice versa.

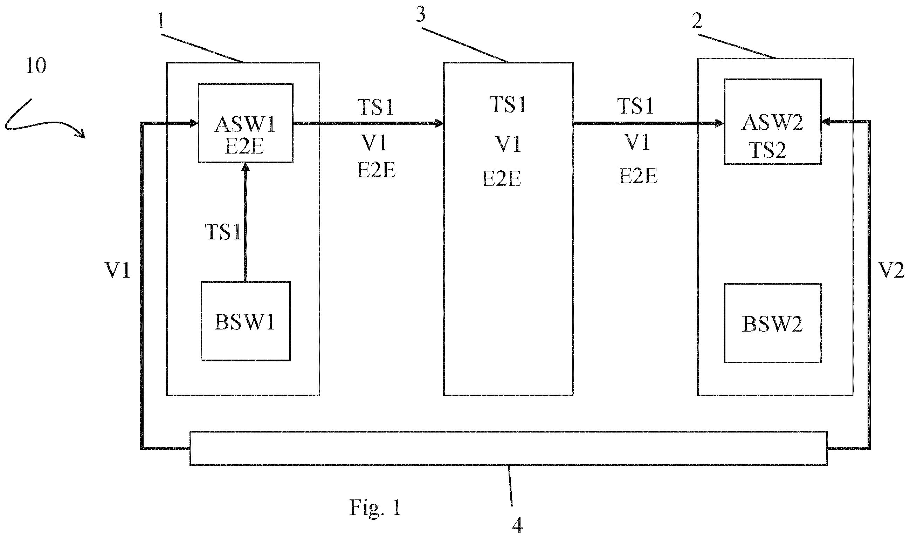

In the following, a description of an embodiment of the present invention is given with respect to figure 1.
- Fig. 1: depicts schematically a control unit of a vehicle configured to carry out a method for generating a timestamp.

As can be gathered from figure 1, the control unit 10, which is configured to be used in a vehicle, comprises a first core 1, a second core 2, a shared memory 3 and a hardware counter 4.

The shared memory 3 is accessible by the two cores 1, 2 and also the hardware counter 4 is accessible by the two cores 1, 2.

Each one of the two cores 1, 2 comprises a basic software layer BSW1, BSW2 and an application software layer ASW1, ASW2, respectively.

The control unit 10 is connected to a (not shown) communication bus comprising a master clock.

The control unit 10 is configured to carry out the method for generating a second timestamp TS2.

In a first step of the method, a master time from the master clock is received based on which the control unit 10 generates a first timestamp TS1.

More specifically, in a second step of the method , the first time stamp TS1 is generated at the basic software layer BSW1 of the first core 1 using the received master time.

In a third step of the method, the generated first timestamp TS1 is sent from the basic software layer BSW1 of the first core 1 to the application software layer ASW1 of the first core 1.

At the application software layer ASW1, the first timestamp TS1 is combined with a first value V1 taken from the hardware counter 4 at a time of sending the first timestamp TS1 from the application software layer ASW1 of the first core 1 to the shared memory 3. It would also be possible that the first value V1 is taken from the hardware counter 4 at a time of generating the first timestamp TS1.

Before sending the first timestamp TS1 and the first value V1 to the shared memory 3, a counter and a checksum E2E are added, at the application software layer ASW1 of the first core 1, to the first timestamp TS1 and the first value V1 of the hardware counter 4.

Then, the first timestamp TS1 and the first value V1 as well as the counter and the checksum E2E are sent from the application software layer ASW1 of the first core 1 to the shared memory 3.

In a fourth step of the method, the first timestamp TS1 and the first value V1 of the hardware counter 4 are saved in the shared memory 3. Also, the counter and the checksum E2E are saved together with the first timestamp TS1 and the first value V1 of the hardware counter 4 in the shared memory 3.

In a fifth step of the method, the second timestamp TS2 is generated at the second core 2.

Therefore, the second core 2 checks at the application software layer ASW2 thereof whether there was a communication failure based on the counter and the checksum E2E before the second timestamp TS2 is generated, and raises an error flag if there was a communication failure. It would be possible, additionally or alternatively, to perform the check during and/or after the generating of the second timestamp TS2.

Then, the second timestamp TS2 is generated based on the saved first timestamp TS1 and the saved first value V1 of the hardware counter 4. The second timestamp TS2 is generated at the application software layer ASW2 of the second core 2.

More specifically, at the application software layer ASW2 of the second core 2 a difference between the first value V1 of the hardware counter 4 and a second value V2 of the hardware counter 4 taken from the hardware counter 4 at a time of generating the second timestamp TS2 is computed. Afterwards, the first timestamp TS1 is updated based on the computed difference to generate the second timestamp TS2, e.g., the computed difference is added to the first timestamp TS1.

At least the first, second, third and/or fourth step of the method may be repeated cyclically, e.g., every 2 ms, wherein the first timestamp TS1 and the first value V1 (and optionally the counter and the checksum E2E) of the previous cycle may be overwritten in the shared memory 3 during the fourth step.

### Reference signs list

- 1: first core
- ASW1: application software layer of the first core
- BSW1: basic software layer of the first core
- 2: second core
- ASW2: application software layer of the second core
- BSW2: basic software layer of the second core
- 3: shared buffer
- 4: hardware counter
- 10: control unit
- TS1: first time stamp
- TS2: second time stamp
- V1: first value taken from the hardware counter at a time of generating the first timestamp and/or at a time of sending the first timestamp
- V2: second value taken from the hardware counter at a time of generating the second timestamp

## Claims

1. A method for generating a second timestamp (TS2) at a control unit (10) of a vehicle,
- wherein the control unit (10) comprises at least two cores (1, 2),
- wherein the control unit (10) comprises a shared memory (3) being accessible by the at least two cores (1, 2) and a hardware counter (4) being accessible by the at least two cores (1, 2),
**characterized in that** the method comprises:
- generating, at a basic software layer (BSW1) of a first one of the at least two cores (1), a first time stamp (TS1),
- sending the generated first timestamp (TS1) from the basic software layer (BSW1) of the first one of the at least two cores (1) to the shared memory (3) via an application software layer (ASW1) of the first one of the at least two cores (1) together with a first value (V1) taken from the hardware counter (4) at a time of generating the first timestamp (TS1) and/or at a time of sending the first timestamp (TS1) from the application software layer (ASW1) of the first one of the at least two cores (1) to the shared memory (3),
- saving the first timestamp (TS1) and the first value (V1) of the hardware counter (4) in the shared memory (3), and
- generating, at a second one of the at least two cores (2), the second timestamp (TS2) based on the saved first timestamp (TS1) and the saved first value (V1) of the hardware counter (4).

2. The method according to claim 1,
**characterized in that** generating the second timestamp (TS2) comprises:
- computing, at the second one of the at least two cores (2), a difference between the first value (V1) of the hardware counter (4) and a second value (V2) of the hardware counter (4) taken from the hardware counter (4) at a time of generating the second timestamp (TS2), and
- updating the first timestamp (TS1) based on the computed difference to generate the second timestamp (TS2).

3. The method according to claim 1 or 2,
- wherein the second one of the at least two cores (2) comprises an application software layer (ASW2),
**characterized in that:**
- the second timestamp (TS2) is generated at the application software layer (ASW2) of the second one of the at least two cores (2).

4. The method according to any one of claims 1 to 3,
- wherein the control unit (10) is connected to a communication bus comprising a master clock,
**characterized in that** the method further comprises:
- receiving, at the control unit (10), a master time from the master clock to be used for generating the first timestamp (TS1).

5. The method according to any one of claims 1 to 4, **characterized in that** a counter and a checksum (E2E) are added, at the application software layer (ASW1) of the first one of the at least two cores (1), to the first timestamp (TS1) and the first value (V1) of the hardware counter (4) before the first timestamp (TS1) and the first value (V1) of the hardware counter (4) are sent from the application software layer (ASW1) of the first one of the at least two cores (1) to the shared memory (3).

6. The method according to claim 5, **characterized in that** the counter and the checksum (E2E) are saved together with the first timestamp (TS1) and the first value (V1) of the hardware counter (4) in the shared memory (3).

7. The method according to claim 5 or 6, **characterized in that** the second one of the at least two cores (2) checks whether there was a communication failure based on the counter and the checksum (E2E) before, during or after generating the second timestamp (TS2).

8. A control unit (10) for a vehicle,
- wherein the control unit (10) comprises at least two cores (1, 2),
- wherein the control unit (10) comprises a shared memory (3) being accessible by the at least two cores (1, 2) and a hardware counter (4) being accessible by the at least two cores (1, 2),
**characterized in that:**
- a first one of the at least two cores (1) is configured to generate at a basic software layer (BSW1) of the first one of the at least two cores (1) a first time stamp (TS1),
- the first one of the at least two cores (1) is configured to send the generated first timestamp (TS1) from the basic software layer (BSW1) of the first one of the at least two cores (1) to the shared memory (3) via an application software layer (ASW1) of the first one of the at least two cores (1) together with a first value (V1) taken from the hardware counter (4) at a time of generating the first timestamp (TS1) and/or at a time of sending the first timestamp (TS1) from the application software layer (ASW1) of the first one of the at least two cores (1) to the shared memory (3),
- the shared memory (3) is configured to save the first timestamp (TS1) and the first value (V1) of the hardware counter (4), and
- a second one of the at least two cores (2) is configured to generate the second timestamp (TS2) based on the saved first timestamp (TS1) and the saved first value (V1) of the hardware counter (4).

9. The control unit (10) according to claim 8, **characterized in that** the control unit (10) is configured to carry out the method according to any one of claims 2 to 7.
